# EUROPEAN PATENT APPLICATION

(11) **EP 1 416 294 A1**
(43) Date of publication of application: **06.05.2004**
(21) Application number: 03078302.1
(22) Date of filing: 20.10.2003
(51) Int. Cl.: G01T 1/04, G01V 5/00

(54) **Apparatus and method for radiation verification**

(30) Priority: 30.10.2002 US 283538
(71) Applicant: EASTMAN KODAK COMPANY, Rochester, New York 14650 (US)
(72) Inventor: Spoonhower, John P., c/o Eastman Kodak Company, Rochester, New York 14650-2201 (US); Paz-Pujalt, Gustavo R., c/o Eastman Kodak Company, Rochester, New York 14650-2201 (US); Stephany, Thomas M., c/o Eastman Kodak Company, Rochester, New York 14650-2201 (US)
(74) Representative: Haile, Helen Cynthia

(57) **Abstract**

An apparatus and method for determining whether a postal object has been exposed to a predetermined level of radiation. In a preferred embodiment, the apparatus is a postage stamp including a radiation detection portion comprising a radiation sensitive material having a first characteristic and a visually observable second characteristic when exposed to a predetermined level of radiation, the first characteristic differing from the second characteristic.

## Description

The invention relates generally to the field of radiation detection and in particular to an apparatus and method for determining whether an article has been exposed to radiation.

Postal services and mail services provide transportation, shipping, and/or delivery of postal articles. Examples of postal/mail services include United Parcel Service (UPS), Federal Express, and the U.S. Postal Service. In some situations, there can exist a need to expose a postal article to radiation. For example, the discovery of anthrax spores at post offices and in mailboxes has caused the U.S. Postal Service to expose some postal articles to radiation in an attempt to eliminate the anthrax spores. In an attempt to ensure that any/all anthrax spores are eliminated, some postal articles have been exposed to large amounts of radiation wherein the postal articles are adversely affected. Indeed, when a large quantity of postal articles are exposed at one time, it is likely that some of the postal articles are overexposed to ensure that all the postal articles are sufficiently exposed.

U.S. Patent No. 6,114,707 *(Willems)* discloses a method for checking whether an article has been inspected by penetrating radiation by providing the article with heat stimulable storage phosphor, wherein the penetrating radiation leaves a human- or machine-readable mark. The article is checked by heating the storage phosphor, releasing emitted light and detecting the emitted light. While such an apparatus may have achieved certain degrees of success in its particular application, it would not be feasible to be employed with a postal article because in postal applications wherein large volumes of mail are processed, heating the mail for subsequent checking is time consuming and requires the addition of heaters, thus rendering such a process both inefficient and costly.

Accordingly, a need exists for a system and method to determine when a postal article has been exposed to a predetermined level of radiation, for example, a level sufficient to eliminate anthrax spores.

An object of the present invention is to provide a system and method wherein it can be determined whether a postal article has been exposed to a predetermined level of radiation.

Another object of the present invention, is to provide such a system and method which also serves to cancel a postage stamp, if a postage stamp has been employed.

These objects are given only by way of illustrative example, and such objects may be exemplary of one or more embodiments of the invention. Other desirable objectives and advantages inherently achieved by the disclosed invention may occur or become apparent to those skilled in the art. The invention is defined by the appended claims.

According to one aspect of the invention, there is provided an apparatus and method for determining when a postal article has been exposed to a predetermined level of radiation. In a preferred embodiment, the system and method also serve to cancel a postage stamp if a postage stamp has been employed.

The foregoing and other objects, features, and advantages of the invention will be apparent from the following more particular description of the preferred embodiments of the invention, as illustrated in the accompanying drawings.
FIG. 1 shows a postal article comprising a postal object which has not been exposed to a predetermined level of radiation.
FIG. 2 shows the postal article of FIG. 1 wherein the postal object has been exposed to a predetermined level of radiation.
FIGS. 3a and 3b show a cross-sectional view of a postal object in accordance with the present invention.
FIG. 4 shows an illustration diagramming a method in accordance with the present invention.
FIGS. 5a through 5i show various configurations of a postal object which has been exposed to a predetermined level of radiation.
FIG. 6 shows a printed inductor with associated circuit capacitance.
FIG. 7 shows a circuit for the inductor of FIG. 6.
FIGS. 8a and 8b show an RF field associated with the inductor of FIG. 5.
FIG. 9 shows a cross-sectional view of a postal object employing the inductor of FIG. 5.
FIG. 10 shows a mail irradiation system employing a conveyor system using a source of radiation, a post irradiation light source and a post irradiation detector.

The following is a detailed description of the preferred embodiments of the invention, reference being made to the drawings in which the same reference numerals identify the same elements of structure in each of the several figures.

For purposes of the present invention, the term "postal" is defined as pertaining to the post office, mail service, shipping service, or the like. Examples of well known post/mail services include the U.S. Postal Service, United Parcel Service (UPS), and Federal Express. Accordingly, the term "postal object" refers to any object supplied by, used by, or associated with the post office or mail service, including, but not limited to, a postage stamp, a postal post card, postal shipping label, postal document (ex: manifests, address sheets, return receipt postcards), postal mailers/ envelopes, postal packaging tape, and postal packaging paper. The term "postage stamp" refers to any label/sticker/stamp/mark which indicates or is representative of payment for the services of the post/mail service.

A postal article is an article intended for shipment/delivery/ transport by the post service or mail service for a user/customer. The postal article includes a user portion and a postal object. For example, a user may desire to send a letter in an envelope via the U.S Postal Service. As such, the postal article is the envelope having a postage stamp attached thereto; the user portion is the envelope/letter and the postal object is the postage stamp. In another example, a user may desire to send a box via UPS. As such, the postal article is a box having a postal shipping label; the user portion is the box and the postal object is the postal shipping label. In a further example, a user may desire to send theater tickets via Federal Express. The user portion is the tickets and the postal object is the cardboard mailer supplied by Federal Express.

For ease of discussion, the present invention will be disclosed with reference to a user portion configured as an envelope/letter and a postal object configured as a postage stamp. However, as indicated above and recognized by those skilled in the art, the postal object is not limited to a postage stamp, and similarly, the user portion is not limited to an envelope.

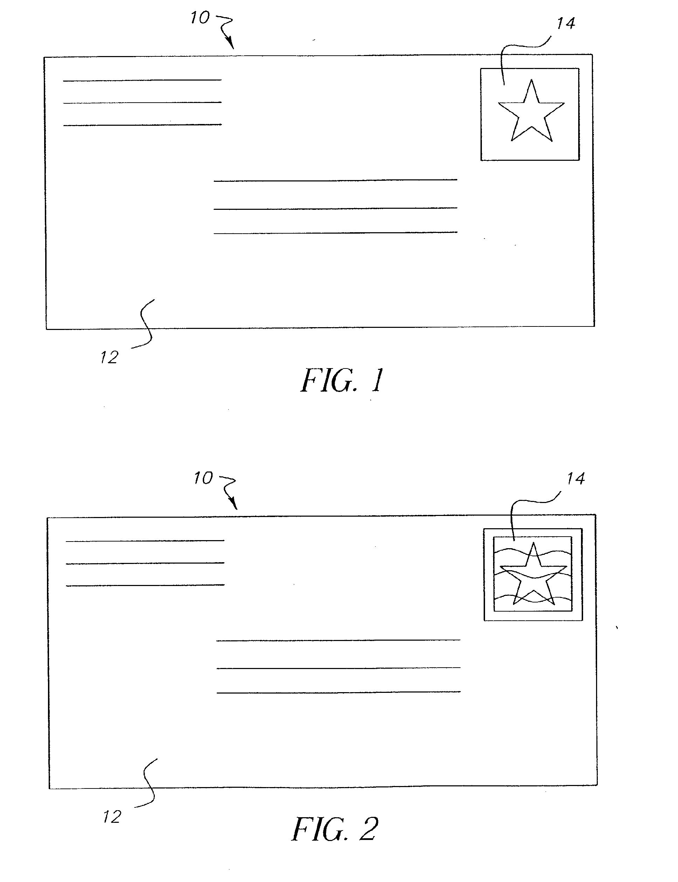

Figure 1 shows an example of a postal article 10 comprising a user portion 12 configured as an envelope and a postal object 14 configured as a postage stamp. Such a postal article 10 can be mailed using the U.S. Postal Service, wherein postal object 14 (i.e., postage stamp 14) is purchased from the U.S. Postal Service and attached to user portion 12 (i.e., the envelope), since it is well known that the U.S. Postal Service will not deliver a letter without postage.

When a postage stamp is obtained from the U.S. Postal Service, it has a first configuration, for example, as shown in Figure 1. To ensure that a postage stamp is not re-used, it is well known that the U.S. Postal Service cancels the postage stamp prior to delivery of the postal article. That is, the U.S. Postal Service places a mark or other visual indicator on the postage stamp to visually alter the appearance of the postage stamp. Typically, cancellation of the postage stamp occurs during the sorting/transport process conducted by the U.S. Postal Service. Accordingly, upon delivery of the postal article to a recipient, the postage stamp has a second configuration, different from the first configuration. Figure 2 shows an example of postage stamp 14 in a second configuration, indicating cancellation of the postal object.

The present invention employs a postal object to determine whether the postal article has been exposed to a predetermined level of radiation. In a preferred embodiment, the postal object is altered in visual appearance by the exposure to radiation, whereby the postal object is "cancelled".

The postal object of the present invention comprises a radiation detection portion having a visually observable characteristic which becomes observable in response to being exposed to a predetermined level of radiation. Stated alternatively, the postal object of the present invention includes a radiation detection portion comprising a radiation sensitive material having a first characteristic and a visually observable second characteristic when exposed to a predetermined level of radiation, the first characteristic differing from the second characteristic.

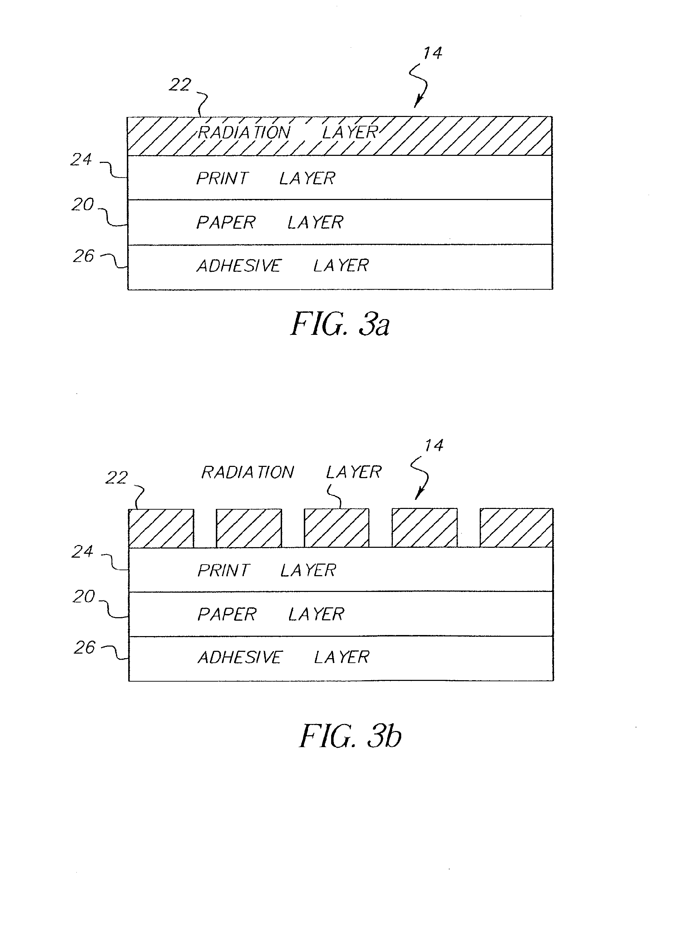

Referring now to Figures 3a and 3b, postage stamp 14 includes a support layer, 20, which can be comprised of plastic, paper or the like, and a radiation detection portion 22. Radiation detection portion 22 can be a layer supported on support layer 20 or another layer, for example a printable layer 24, may be disposed intermediate. Postage stamp 14 can optionally include an adhesive layer 26 for adhesively applying postage stamp 14 to postal article 10 and/or user portion 12. Radiation detection portion 22 does not need to be a continuous or uniform layer. For example, as shown in Figure 3b, radiation portion 22 is comprised of discrete areas, and is not a continuous layer. As such, as will become apparent below, radiation portion 22 can form/define a pattern, design, symbol, or the like.

Radiation detection portion 22 has a first characteristic when not been exposed to radiation. Radiation detection portion 22 is configured such that when it is exposed to a predetermined level of radiation, a second characteristic, different from the first characteristic, becomes visually observable. For example, radiation detection portion 22 can change from being transparent to being opaque upon exposure to a predetermined level of radiation. Therefore, if radiation detection portion 22 defines a pattern, the pattern will become observable upon exposure to the predetermined level of radiation. The first and second characteristics of radiation detection portion 22 will be further discussed below.

Known radiation dosimeters employ radiochromatic dyes which change color or shade plus density upon exposure to radiation. Therefore, they have been used to determine the amount of radiation that has been received in a given environment. Reference is made to U.S. Patent No. 4, 918,317 *(Hess).*

The present invention employs a material which changes characteristic when it has been exposed to a predetermined level of radiation. In a preferred embodiment, the predetermined level is a level of radiation sufficient to eliminate anthrax spores. The change in characteristic of radiation detection portion 22 is preferably permanent. In a preferred embodiment, radiation detection portion comprises a class of chemicals referred to as L-alanines. L-alanines are a known family of chemicals, a description of which can be accessed in a chemical dictionary such as the online chemical dictionary available at the website www.chemnet.com.

L-alanines can be printed transparent and become visible when exposed to a predetermined level of ionizing radiation. L-alanines produce a color change when exposed to a high level of radiation. Other materials are known which change color with a lower exposure to radiation.

L-alanines are known to produce a readily detectable Electron Spin Resonance (ESR) or equivalently, Electron Paramagnetic Resonance (EPR) signal at much lower radiation doses. By measuring the change in absorption of microwave energy within a continuously varying strong magnetic field, ESR detects the number of "unpaired spins" of electronic charges trapped at various defects in the material. Thus, rather than a visually observable second characteristic, the second characteristic is an electronically detectable second characteristic.

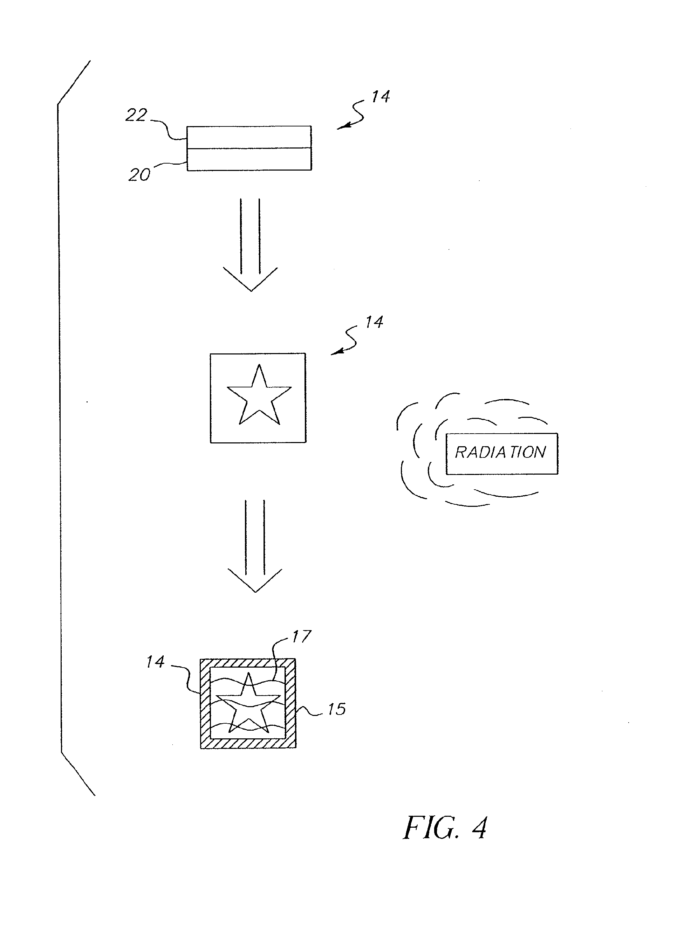

A method in accordance with the present invention is illustrated in Figure 4. As illustrated, there is provided a method for determining whether postal object 14 has been exposed to a predetermined level of radiation. Postal object 14 is provided, wherein postal object 14 includes radiation detection portion 22 having a visually observable characteristic which become observable in response to being exposed to a predetermined level of radiation. Postal object 14 is exposed to radiation. Once exposed to the predetermined level, the visually observable characteristic of radiation detection portion 22 is visible. Determining whether the postal object has been exposed to the predetermined level of radiation can be accomplished by visually assessing whether the radiation detection portion is of the visually observable second characteristic. For the example shown in Figure 4, postal object 14 includes a border 15 and wavy lines 17 which are not visible prior to being exposed to radiation, and visible after exposure to a predetermined level of radiation. The visually observable characteristics acts to cancel the postage stamp.

The system and method of the present invention can be employed to eliminate anthrax spores in postal articles. A large volume of postal articles can be exposed to a single radiation source. Those postal articles, which have received the predetermined level of radiation sufficient to eliminate the anthrax spores, will include a postal object showing the second characteristic. As such, postal employees can sort through the large volume of postal articles, and by a visual inspection, determine which postal articles need additional exposure to radiation and which can be further processed.

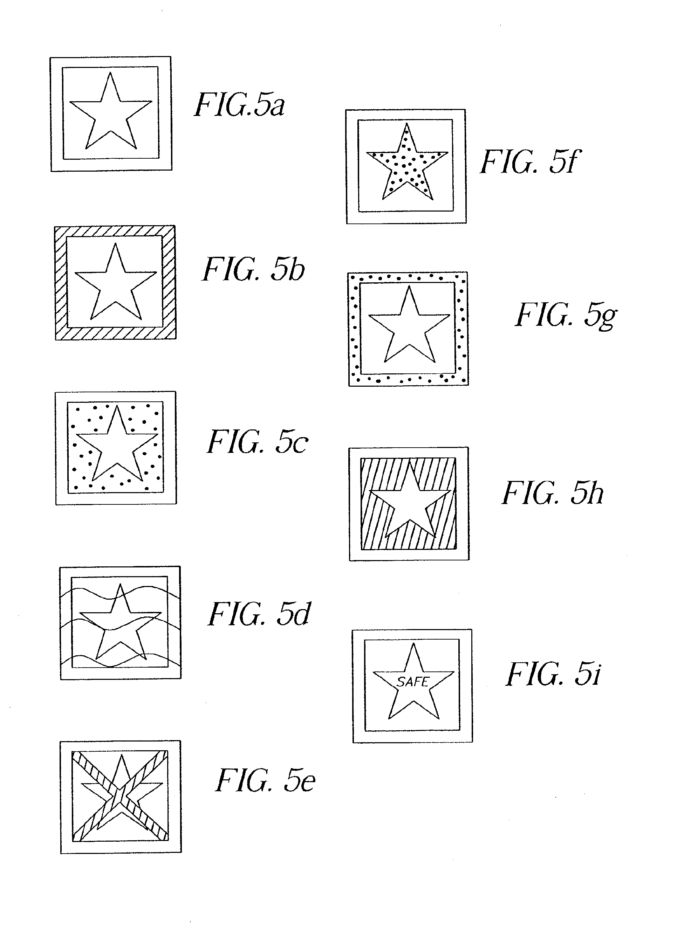

Simultaneous with the second characteristic being observable in postage stamp 14, the postal stamp can be cancelled. That is, radiation detection portion 22 can be configured so as to generate a pattern, design, mark or other indicator on postal stamp 14 which represents a cancellation of postal stamp 14. For example as shown in Figure 4, border 15 and wavy lines 17 provide a mark to indicate cancellation of the postage stamp. As such, the present invention provides a method of determining whether a postal object has been exposed to a predetermined level of radiation simultaneous with the cancellation of the postal object. Figures 5a-5i provide additional examples of how radiation detection portion 22 of postal object 14 can be configured to provide a visually observable second characteristic that acts to cancel the postal stamp. For example, Figure 5e shows radiation detection portion 22 defining an "X" and Figure 5i shows radiation detection portion 22 arranged as the word "safe". The visually observable second characteristic can comprise a new color, different shading or shadowing, a pattern, symbol, or the like.

As indicated above and recognized by those skilled in the art, the postal object 14 is not limited to a configuration of a postage stamp. For example, postal object can comprise a cardboard mailer having radiation detection portion 22 supported thereon. Therefore, when the mailer is exposed to radiation, the mailer is "cancelled" when the second characteristic of radiation detection portion 22 is observable. In another example, postal object 14 is configured as postal packaging tape having the words "first class mail" printed thereon. When the packaging tape is exposed to radiation, the words "thank you for using the U.S. Postal Service" can be observable, indicating that the package has been irradiated, ensuring that the packing tape is not re-used, and also serving as a customer appreciation memo.

Radiation detection portion 22 can include other materials or techniques. For example, portion 22 can comprise conductive plastics such as polythiophenes. The resistance of these plastics can be increased by punching holes in their structure, or the conductivity can be destroyed by exposing portion 22 heavily enough to open the structure. That is, as high-energy particles such as gamma rays bombard a radio frequency (RF) tank constructed from polythiophene, holes are punched through the structure as a result of the radiation breaking individual chemical bonds of the polymer structure, until the circuit is electrically opened. Thusly, the RF effect of the printed circuit is destroyed, and when re-passed through the RF field, no further decrease in the amplitude of the waveform is observed.

In another embodiment, radiation detection portion 22 comprises inks which respond to ionizing radiation. Some suitable inks are available from UV Process Supply, Inc. of Chicago, Illinois. These inks alter color as a result of e-beam exposure which enables the employment of the inks for postage stamp 14 or other postal objects. For example, such an ink can be comprised of a solvent, like water or methanol and possibly other components like anti-foamants, humectants, or the like in which small solid phosphor particles are dispersed carried by the solvent to a receiver (e.g., the envelope). These particles can be made particularly small (for example, less than 1 micron) by well-established methods such as by employing nano-milling technology. The phosphor particles emit light immediately in response to radiation. Such particles, which emit light when exposed to radiation, are termed prompt emitters. Alternatively, storage phosphors could be included as part of the ink formulation. In this latter instance, the phosphor materials would emit light after radiation when excited by visible infrared light. Either type of phosphor could be employed as part of an ink formulation that includes conventional solid color particles.

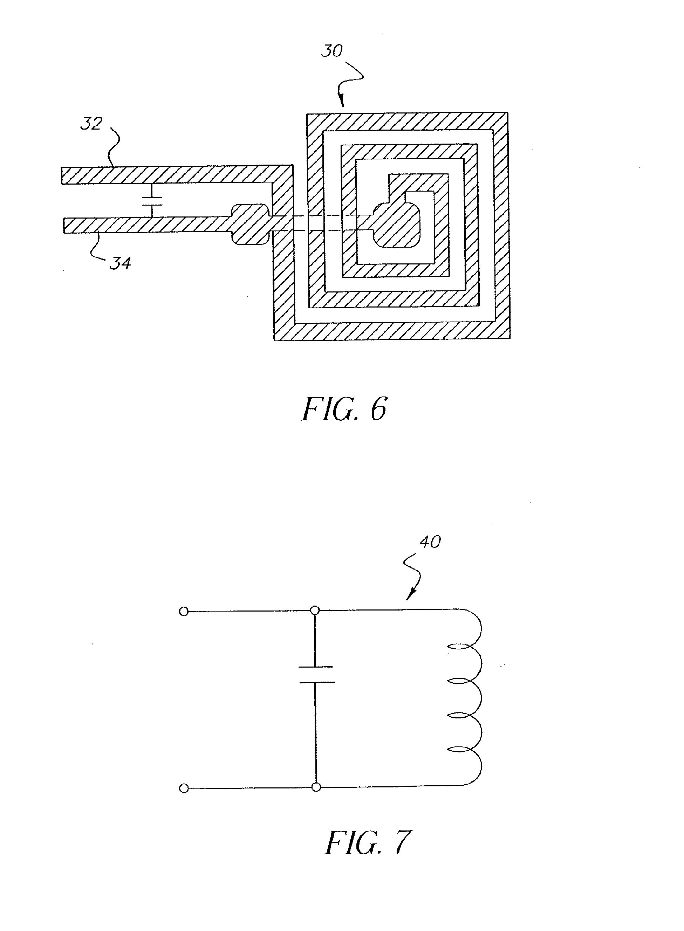

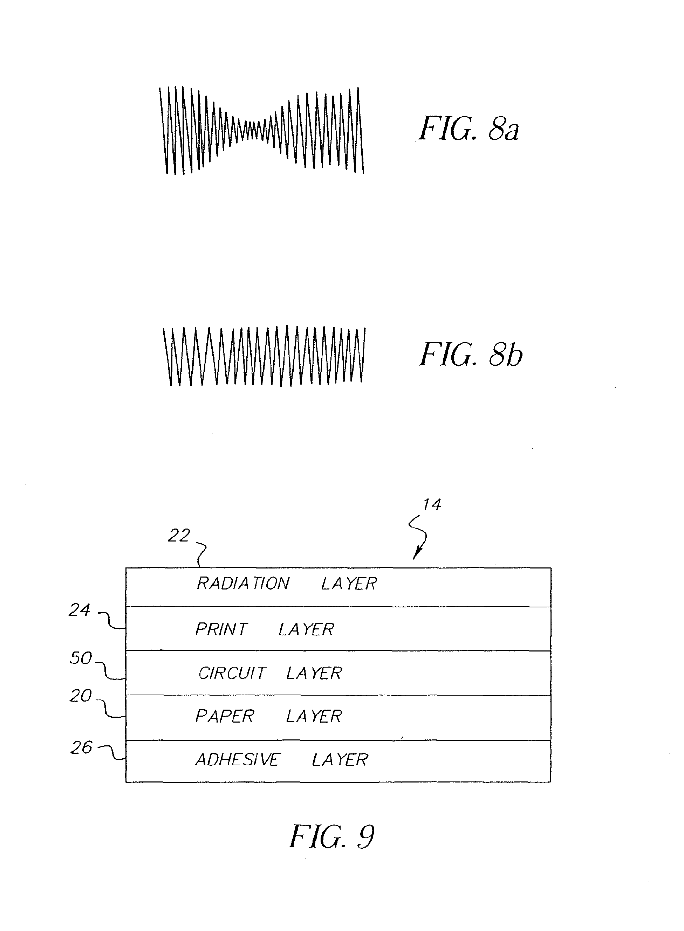

In a further embodiment, radiation detection portion 22 includes a printed inductor 30, such as shown in Figure 6. As shown, inductor 30 includes two members 32,34 whose length and spacing define a capacitance. The frequency of resonance is determined by the equation F0 = 1/2π√LC wherein C is capacitance and L is inductance. A typical circuit 40 for the embodiment shown in Figure 6 is shown by the schematic diagram of Figure 7. Referring to Figure 8a, when postage stamp 14 is exposed to a radio frequency (RF) field of a predetermined frequency, a decrease in the RF field will result when circuit 40 is exposed to the RF field. As shown in Figure 8b, after exposure of a predetermined level of radiation, postage stamp 14 will cause minimal or no decrease in the RF field as a result of the shifting of resonant frequency or the partial/total destruction of circuit 40. Circuit 40 can be printed on or applied to surfaces or layers comprising postage stamp 14. Figure 9 shows one embodiment wherein a circuit layer 50 comprising circuit 40 is disposed intermediate radiation detection layer 22, printable layer 24, support layer 20, and adhesive layer 26. Circuit 40 can further be employed for additional methods of sterilization.

With regard to sterilization, for years, medical professionals have employed sterilizing equipment to eliminate/reduce bacteria, spores and other dangerous micro-organisms. These professionals recognize that most bacteria and spores are eliminated when exposed to temperatures of at least 273 degrees Fahrenheit for 20 minutes. This sterilization allows complete eradication of bacteria, and keeps people free of disease or infection. One reference is "Spore destruction requires steam sterilization" from the Biological Warfare Defense Information Sheet; The U.S. Navy Manual on Operational Medicine and Fleet Support; Section on Anthrax and Biological Warfare. Sterilization can also be accomplished through the use of ionizing radiation. Researchers have shown that radiation doses between about 25 to over 40 Kilogray are effective in eliminating the anthrax spores, when Clostridium Botulinum resists irradiation below the 10-kilogray upper-limit for food processing. The research has been conducted with gamma irradiators using 60Co or137Cs. Research is being conducted to verify that electron beam (e-beam) irradiation is also an effective radiation source for eliminating anthrax spores. E-beam irradiation is currently utilized for sterilizing medical equipment and is commonly used in cold pasteurization of food. X-ray machines could be employed to eliminate the anthrax spores if the x-rays are sufficiently powerful. However, generally, a medical or dental x-ray machine is not able to deliver a dose sufficient to eliminate the anthrax spores without doing significant damage to the x-ray tube. X rays produced from a linear accelerator could possibly have a capacity to deliver the necessary dose. However, in using a linear accelerator, the e-beam mode would be better employed since the denser radiation field produced allows the irradiation time to be reduced, thus allowing more throughput of the product being irradiated. An expected limitation of the e-beam is the limited penetrability of the electrons, whereby packages/objects are generally limited to a size of about five inches in depth, but which varies based on the density of the product being irradiated. Therefore, for thicker and/or denser objects, the x-ray mode would be more desirable to ensure complete sterilization.

Accordingly, various radiation sensitive material can comprise radiation detection portion 22. As discussed above, a first method employs the material L-alanine, wherein electron spin resonance of free radicals is produced by ionizing radiation exposure.

Another method employs f-center color change produced by ionizing radiation exposure. F-centers (or color centers) are microscopic defect centers produced in the crystalline lattice of solid state materials when exposed to ionizing radiation. F-center production and characterization has been particularly established for alkali halide materials. An F-center corresponds to an electron bound to a missing halogen ion; this bound electron typically has electron energy level that provides optical transitions in the visible portion of the spectrum. Thus, the effect of exposure to radiation in these materials is to change a colorless material into a highly colored material. Accordingly, radiation detection portion 22 could comprise f-centers.

Yet another method employs radiation exposure induced fluorescence. More particularly, a number of radiation induced defects produce fluorescence as a result of exposure to ionizing radiation. F-centers in addition to becoming highly colored as a result of exposure to ionizing radiation, also exhibit fluorescence. Alkali halide materials that have not been exposed to radiation, and consequently have no F-centers, do not emit light when stimulated by visible light. Accordingly, radiation detection portion 22 could comprise radiation exposure induced fluorescence.

A still further method employs an encapsulated color agent, for example a dye, which is released from a polymer. For example, the polymer bursts upon the exposure to a predetermined level of radiation, thereby releasing a dye disposed within the polymer. Micro encapsulation is the encasing of small quantities of liquid within shells of impermeable material. The small shells are suspended in an aqueous solution suitable for application to many different substrates or blended with other products such as coatings. The liquid payload held in the shells can be released at a later time by breaking the case, either by friction (rubbing) or other means such as ionizing radiation. Bombardment of the shells will weaken the encapsulant's structure, thus releasing the encapsulent. Accordingly, radiation detection portion 22 could comprise an encapsulated color agent

Yet a further method employs storage phosphor with light induced stimulation light emission produced by ionizing radiation exposure.

Still yet another method employs conductivity change in a polymer produced by ionizing radiation exposure.

Yet a still further method employs dye color change produced by ionizing radiation exposure.

Another method employs phosphor prompt light emission and light detector signal produced by ionizing radiation exposure. That is, light emission from the phosphor material proceeds rapidly while under excitation from the radiation source (x-ray, electron beam, or gamma). Prompt emission occurs from an excited state of the phosphor. Excitation to the emitting state is a direct consequence of the absorption of the radiation energy. This is essentially a single step process and differs from a storage phosphor light emitting mechanism. In the latter case, the radiation energy absorbed by the phosphor is stored in the material to be released as light emission following a second stimulating of the phosphor. The second stimulation source is typically visible light. Thus, the process is a two-stage process.

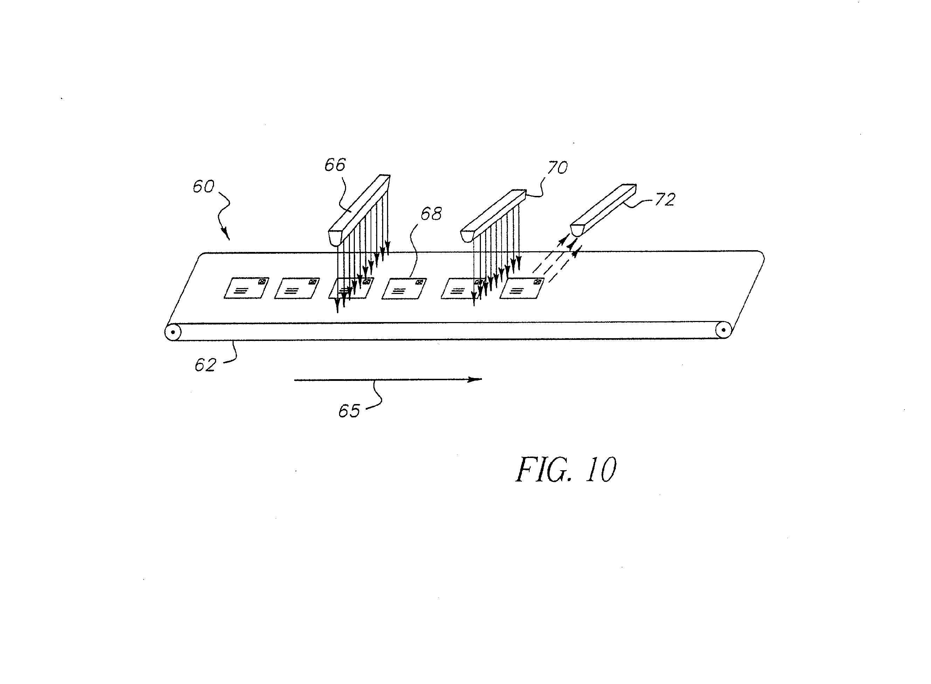

Referring now to Figure 10, a system is shown employing postal object 10 configured as a stamp. More particularly, Figure 10 shows in detail a mail irradiation system 60 utilizing a transport system such as conveyor belt 62 for transport of pre-irradiated mail 64. As pre-irradiated mail 64 is transported along conveyor belt 62 in a direction 65 and passes through an irradiation source 66, a visually detectable mark will appear on post-irradiated mail 68 caused by a chemical change in the radiation sensitive chemicals/materials which have been placed somewhere on pre-irradiated mail 64. In this example, a detectable mark appears upon the stamp. As conveyor belt 62 moves post irradiated mail 68, a scanning light source 70 illuminates post irradiated mail 68 which has attached the stamp with the detectable mark. A detector 72, such as a linear scan CCD, verifies whether post-irradiated mail 68 for proper irradiation.

It is noted that irradiation source 66 can be configured in as a source of x-rays, ultra violet, electrons, gamma rays. In addition, detector 72 is configured for appropriate detection, which can include detection for light luminance or phosphoresce from a storage phosphor.

## Claims

1. A postal object including a radiation detection portion comprising a radiation sensitive material having a first characteristic and a visually observable second characteristic when exposed to a predetermined level of radiation, the first characteristic differing from the second characteristic.

2. A postage stamp, comprising:
a radiation detection portion comprising a radiation sensitive material having a first characteristic and a visually observable second characteristic when exposed to a predetermined level of radiation, the first characteristic differing from the second characteristic.

3. The postage stamp of Claim 2, wherein the first characteristic has a first opacity and the second characteristic has a second opacity different than the first opacity.

4. The postage stamp of Claim 2, wherein the first characteristic comprises a first color and the second characteristic comprises a second color different than the first color.

5. The postage stamp of Claim 2, wherein the first characteristic is visually observable.

6. The postage stamp of Claim 2, wherein the radiation sensitive material comprises 1-alanine.

7. A method of determining whether a postal object has been exposed to a predetermined level of radiation, the postal object comprising a radiation detection portion having a visually observable characteristic which become observable in response to being exposed to a predetermined level of radiation, comprising the steps of:
exposing the postal object to radiation, and
determining whether the postal object has been exposed to the predetermined level of radiation by assessing whether the radiation detection portion is of the visually observable characteristic.

8. The method of Claim 7, further comprising the step of canceling the postal object by exposing the radiation detection portion to the predetermined level of radiation

9. A method of canceling a postage stamp, comprising the step of:
exposing the postage stamp to a predetermined level of radiation, the postage stamp including a radiation detection portion having a visually observable characteristic which become observable in response to being exposed to the predetermined level of radiation

10. A postal object comprising a radiation detection portion having an electronically detectable characteristic which become detectable in response to being exposed to a predetermined level of radiation.
